# EUROPÄISCHE PATENTANMELDUNG

(11) **EP 1 804 030 A2**
(43) Veröffentlichungstag der Anmeldung: **04.07.2007**
(21) Anmeldenummer: 06127332.2
(22) Anmeldetag: 29.12.2006
(51) Int. Cl.: G01D 3/02, G01D 18/00

(54) **Fahrerassistenzsystem**

(30) Priorität: 03.01.2006 DE 102006000642
(71) Anmelder: ROBERT BOSCH GMBH, 70442 Stuttgart (DE)
(72) Erfinder: Simon, Andreas, 31135, Hildesheim (DE)

(57) **Zusammenfassung**

Die Erfindung betrifft ein Fahrerassistenzsystem (1) mit einer Vielzahl von Sensoren (S1,S2,Sx), denen Kalibrierparameter zugeordnet sind. Das Fahrerassistenzsystem (1) umfasst ein zentrales Speichermittel für die Speicherung der Kalibrierparameter. Die Kalibrierparameter können den Einbauart und/oder Ortskoordinaten sensorfester Koordinatensysteme umfassen.

## Beschreibung

### Stand der Technik

Die Erfindung betrifft ein Fahrerassistenzsystem nach dem Oberbegriff des Anspruchs 1 und ein Verfahren zu dessen Betrieb nach dem Oberbegriff des Anspruchs 6. Fahrerassistenzsysteme der gattungsgemäßen Art sollen den Fahrer bei der Führung des Fahrzeugs unterstützen und ihm, insbesondere bei schlechten Sichtbedingungen und/oder starker Verkehrsbelastung des Verkehrsraums, die Führung des Fahrzeugs erleichtern. Ein Fahrerassistenzsystem umfasst daher üblicherweise auch Sensoren für die Erfassung der Fahrzeugumgebung. Diese Sensoren (zum Beispiel ACC-Radarsensoren) werden in einem Fahrzeug noch einzeln eingesetzt oder, im Falle des Einsatzes mehrerer Sensoren, unabhängig voneinander betrieben. Künftig ist jedoch mit einer wachsenden Anzahl von Sensoren und einer zunehmenden Vernetzung dieser Sensoren (Sensordatenfusion) zu rechnen. Um die Sensordaten räumlich zueinander und zu dem Fahrzeug in Beziehung setzen zu können, müssen insbesondere die jeweilige Einbaulage und das jeweilige lokale Koordinatensystem der Sensoren relativ zu einem gemeinsamen Koordinatensystem bekannt sein. Die Kalibrierung der Einbaulage kann dabei entweder physikalisch oder softwaretechnisch erfolgen. Bei einer physikalischen Variante, die heute beispielsweise bei ACC-Sensoren zur Anwendung kommt, ist die Einbaulage der Sensoren durch bauliche Gegebenheiten fest spezifiziert, so dass die Sensoren physikalisch, entsprechend der baulichen Vorgabe, ausgerichtet werden müssen. Bei einer softwaretechnisch realisierten Kalibrierung hingegen, wird eine physikalisch vorgegebene Einbaulage vermessen und mit entsprechenden Parametern gespeichert. Dies erfolgt im Allgemeinen durch eine entsprechende Kalibriersoftware außerhalb der Sensoren, entweder offline auf einem Kalibrierfeld oder online während der Fahrt eines mit dem Fahrerassistenzsystem ausgerüsteten Fahrzeugs. In der Praxis treten weiterhin Probleme dadurch auf, dass die Parameter der Einbaulagen der Sensoren, in Abhängigkeit von der Wahl des gemeinsamen Koordinatensystems, starken Schwankungen unterworfen sein können. Wenn beispielsweise ein horizontiertes Koordinatensystem nach DIN 70000 gewählt wird, dann beeinflussen Nick- und Wankbewegungen des Fahrzeugs unmittelbar die Kalibrierparameter der Sensoren. Module des Fahrerassistenzsystems, die softwaretechnisch kalibrierte Sensoren verwenden, müssen stets den Parametersatz der aktuellen Softwarekalibrierung einlesen. Dies kann prinzipiell entweder offline durch das einmalige Einlesen von Daten oder online über eine Datenverbindung erfolgen. Die Verwendung von Kalibrierdateien hat jedoch schwerwiegende Nachteile. Zum einen müssen die Kalibrierdaten manuell an nachgeschaltete Module verteilt werden. Zum anderen ist die Nachführung der Parameter im laufenden Betrieb im Allgemeinen nicht ohne weiteres möglich.

### Vorteile der Erfindung

Die Erfindung geht davon aus, dass durch eine zentrale Speicherung und Verwaltung von Kalibrierparametern der Sensoren eines Fahrerassistenzsystems ein besonders effektiver und zuverlässiger Betrieb eines solchen Fahrerassistenzsystems ermöglicht wird. Dazu umfasst das Fahrerassistenzsystem eine Speichereinrichtung für die zentrale Ablage von Kalibrierparametern der Sensoren des Fahrerassistenzsystems, die dezentral über das Fahrzeug verteilt angeordnet sein können. Bei den Sensoren kann es sich beispielsweise um vorausschauende Sensoren handeln, die vorzugsweise in dem Frontbereich des Fahrzeugs und rückschauende Sensoren handeln, die zweckmäßig in dem Heckbereich des Fahrzeugs angeordnet sind. Es sind jedoch auch beliebige andere Sensorkombinationen denkbar. Durch die zentrale Speicherung der Kalibrierparameter können diese besonders einfach verwaltet und gepflegt werden. Weiterhin können die Kalibrierparameter dadurch auch besonders einfach an andere Systeme des Fahrzeugs weitergegeben werden, die beispielsweise über einen Datenbus mit der Speichereinrichtung verbunden sind. Da die Kalibrierparameter zentral gespeichert sind, kann durch Vergleich mit aktuellen Sensorparametern auch besonders einfach festgestellt werden, ob sich Parameter ändern. Auf diese Weise können vorteilhaft auch Auslenkungen des Fahrzeugs, wie beispielsweise Nick- und/oder Wankbewegungen, erfasst und ggf. kompensiert werden, wenn für derartige Auslenkungen empfindliche Kalibrierparameter betroffen sind. Besonders vorteilhaft umfasst das Fahrerassistenzsystem weiterhin ein Funktionsmodul, das eine Koordinatentransformation ermöglicht. Auf diese Weise können Ortskoordinaten der Sensorausgangsdaten in ein dem Fahrzeug zugeordnetes Koordinatensystem umgewandelt werden.

### Zeichnung

Ausführungsbeispiele der Erfindung werden im Folgenden unter Bezug auf die Zeichnung erläutert. Dabei zeigt
- Figur 1: ein erstes Blockdiagramm eines Fahrerassistenzsystems;
- Figur 2: ein zweites Blockdiagramm eines Fahrerassistenzsystems

### Beschreibung der Ausführungsbeispiele

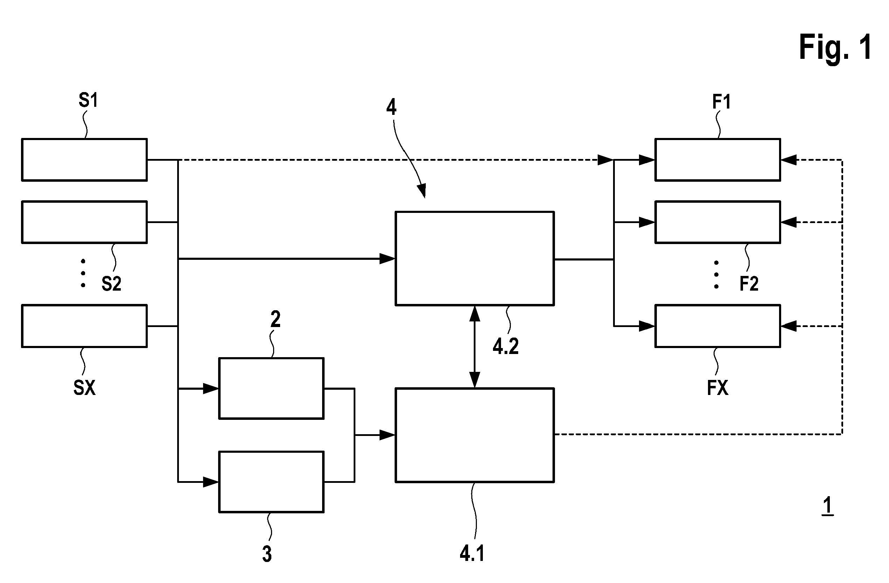

Figur 1 zeigt ein erstes Blockdiagramm eines Fahrerassistenzsystems 1 mit Spurerkennungsfunktion und dessen Einbindung in weitere Systeme eines nicht dargestellten Fahrzeugs, die durch Funktionsmodule F1, F2, FX gekennzeichnet sind. Die weiteren Systeme können dabei auch Teilsysteme des Fahrerassistenzsystems 1 sein, die zusätzliche Assistenzfunktionen, wie beispielsweise eine Spurverlassenswarnung oder Einparkhilfe (Parkpilot) ermöglichen. Das Fahrerassistenzsystem 1 umfasst eine Mehrzahl von Sensoren S1, S2, SX. Diese Sensoren sind an unterschiedlichen Stellen in dem nicht dargestellten Fahrzeug angeordnet. Beispielsweise in dem Frontbereich des Fahrzeugs als so genannte vorausschauende Sensoren oder in dem Heckbereich als rückwärts schauende Sensoren. Bei den Sensoren handelt es sich vorzugsweise um so genannte Umfeldsensoren auf Video- und/oder Radarbasis, die Daten aus dem Umfeld des Fahrzeugs erfassen. Die Sensoren sind sowohl unmittelbar mit einem Funktionsmodul 4, als auch mittelbar über Funktionsmodule 2, 3 mit dem Funktionsmodul 4 verbunden. Das Funktionsmodul 4 umfasst zwei Funktionsmodule 4.1 und 4.2. Die Funktionsmodule F1, F2, FX des Fahrzeugs sind direkt mit den Sensoren und mit den Funktionsmodulen 4.1 und 4.2 verbunden.

Im Folgenden wird die Funktionsweise des Fahrerassistenzsystems 1 beschrieben. Kalibrierdaten der Sensoren S1, S2, SX werden beispielsweise mit Hilfe des Funktionsmoduls 2 offline ermittelt und in dem als Speichereinrichtung ausgebildeten Funktionsmodul 4.1 des Funktionsmoduls 4 gespeichert. Alternativ werden Kalibrierparameter der Sensoren mittels des Funktionsmoduls 3 online, also während des Betriebs des Fahrzeugs, gewonnen und ebenfalls in dem Funktionsmodul 4.1 gespeichert. Zu den Kalibrierdaten gehören insbesondere auch physikalische, bzw. konstruktiv bedingte Merkmale über den Einbauort der Sensoren oder deren aktuelle Lage in Bezug auf ein außerhalb des Fahrzeugs liegendes Koordinatensystem, zum Beispiel ein horizontiertes Koordinatensystem nach DIN 70000. Bei Bedarf greifen die Funktionsmodule F1, F2, FX auf die in dem Funktionsmodul 4.1 gespeicherten Kalibrierparameter zurück. Dies ist beispielsweise dann wichtig, wenn ein Sensor wegen eines Defekts ausgetauscht und ein neuer Sensor in das Fahrerassistenzsystem 1 integriert werden muss.

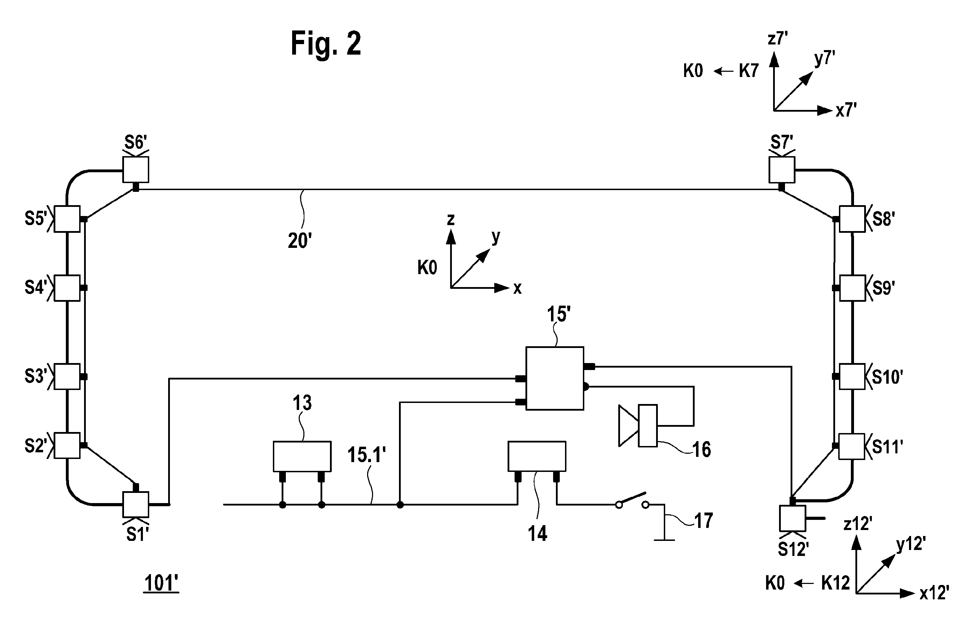

In einer alternativen Ausführungsvariante werden die die baulich bedingte Lage der Sensoren bestimmenden Parameter dem Funktionsmodul 4.2 zugeleitet. Dieses Funktionsmodul sorgt für eine Koordinatentransformation. Diese Koordinatentransformation bewirkt, dass die in einem lokalen, sensorfesten Koordinatensystem definierten Sensorausgangsdaten in ein einheitliches Koordinatensystem umgewandelt werden. Hierbei handelt es sich beispielsweise um von den Sensoren erkannte Objekte in der Fahrzeugumgebung. Bei diesem einheitlichen Koordinatensystem handelt es sich vorzugsweise um ein fahrzeugfestes Koordinatensystem, dessen Achsen sich entlang der Fahrzeugachsen erstrecken und dessen Nullpunkt beispielsweise in dem Schwerpunkt des Fahrzeugs liegt. Diese Koordinatentransformation wird im Folgenden beispielhaft unter Bezug auf die Darstellung in Figur 2 erläutert.

Figur 2 zeigt ein zweites Blockdiagramm eines Fahrerassistenzsystems 101' mit Andeutung einer Fahrzeugkontur. Das Fahrerassistenzsystem 101' umfasst eine Vielzahl von Sensoren S1' bis S12'. Wie in Figur 2 dargestellt, können die Sensoren S1' bis S12' vorzugsweise in dem vorderen und in dem hinteren Bereich des Fahrzeugs angeordnet sein. Beispielsweise seien die Sensoren S1' bis S6' in dem vorderen Teil des Fahrzeugs und die Sensoren S7' bis S12' in dem hinteren Teil des Fahrzeugs angeordnet.
Die Kontur des hier nicht detailliert dargestellten Fahrzeugs ist durch die Lage der Sensoren S1' bis S12' angedeutet. Die Sensoren sind vorteilhaft durch ein Bussystem 20' mit einem Steuergerät 15' verbunden. Mit dem Steuergerät 15' ist eine Signaleinrichtung 16 verbunden. Bei dieser handelt es sich vorteilhaft um eine akustische Signaleinrichtung, die, in Abhängigkeit von Signalen der Sensoren S1', S12', von dem Steuergerät 15' gesteuert wird. Über diese Signaleinrichtung 16 kann das Fahrerassistenzsystem beispielsweise Warnsignale ausgeben, die den Fahrer auf ein Risiko aufmerksam machen. Ein Risiko besteht beispielsweise dann, wenn das Fahrzeug unbeabsichtigt seine Fahrspur verlässt. Mit dem Steuergerät 15' ist weiterhin ein Displaymodul 14 verbunden. Bei dem Displaymodul 14 handelt es sich beispielsweise um einen Monitor, auf dem von den Sensoren erfasste Umfelddaten aus der Umgebung des Fahrzeugs in einer für den Fahrer leicht erfassbaren Art visuell dargestellt werden. Mit 17 ist eine Schalteinrichtung bezeichnet, die ein Einschalten oder Ausschalten des Displaymoduls 14 ermöglicht. Mit Bezugsziffer 13 ist ein Funktionsmodul bezeichnet, das stellvertretend für weitere Systeme des Fahrzeugs steht, die mit dem Fahrerassistenzsystem 100' funktionsmäßig verbunden sind. Das Funktionsmodul 13 ist über eine Busleitung 15.1' mit dem Steuergerät 15' verbunden. Jedem der Sensoren S1' bis S12' ist ein sensorfestes Koordinatensystem Ki(xi', yi', zi') zugeordnet. Beispielsweise ist dem Sensor S7 das Koordinatensystem K7(x7', y7', z7') zugeordnet. Dem Sensor S12 ist das Koordinatensystem K12(x12', y12', z12') zugeordnet. Auch dem Fahrzeug selbst ist ein Koordinatensystem K0 zugeordnet, dessen Achsen mit x, y, z bezeichnet sind. Der Nullpunkt dieses Koordinatensystems K0 liegt beispielsweise in dem Schwerpunkt des Fahrzeugs. Durch eine Koordinatentransformation in dem Funktionsmodul 4.2 werden die Koordinaten der einzelnen Sensoren auf ein einheitliches, dem Fahrzeug zugeordnetes Koordinatensystem K0 umgerechnet. Durch die zentrale Speicherung und Verwaltung von Kalibrierparametern der Sensoren des Fahrerassistenzsystems wird ein besonders effektiver und zuverlässiger Betrieb eines solchen Fahrerassistenzsystems ermöglicht. Durch die zentrale Speicherung der Kalibrierparameter können diese besonders einfach verwaltet und gepflegt werden. Weiterhin können die Kalibrierparameter dadurch auch besonders einfach an andere Systeme des Fahrzeugs weitergegeben werden, die beispielsweise über die Busleitung 15.1' mit der Speichereinrichtung (Funktionsmodul 4.1) verbunden sind. Da die Kalibrierparameter zentral gespeichert sind, kann durch Vergleich mit aktuellen Sensordaten auch besonders einfach festgestellt werden, ob sich Parameter ändern. Durch Auswertung der Änderungen können vorteilhaft auch dynamische Änderungen der Fahrzeuglage , wie insbesondere Nick- und Wankbewegungen des Fahrzeugs, erfasst und ggf. kompensiert werden, wenn für Nick- und Wankbewegungen anfällige Kalibrierparameter betroffen sind. Ein Vergleich der gespeicherten Sensorparameter mit den aktuellen Parametern ist nicht notwendig, wenn die gespeicherten Parameter dynamisch nachgeführt werden. In diesem Fall können Nick- und/oder Wankbewegungen des Fahrzeugs direkt an denjenigen Kalibrierparametern abgelesen werden, die durch diese Bewegungen beeinflusst werden. Die beschriebenen Verfahren sind auch vorteilhaft geeignet für die gegenseitige Kalibrierung von Sensoren (Kreuzkalibrierung) unter Rückgriff auf die zentral gespeicherten Kalibrierparameter und/oder die Anwendung der Koordinatentransformation.

## Patentansprüche

1. Fahrerassistenzsystem (1, 101') mit einer Vielzahl von Sensoren (S1,S2,Sx, S1',... S12'), denen Kalibrierparameter zugeordnet sind, **dadurch gekennzeichnet, dass** das Fahrerassistenzsystem (1, 101') Speichermittel (Funktionsmodul 4.1) für die Speicherung der Kalibrierparameter umfasst.

2. Fahrerassistenzsystem nach Anspruch 1, **dadurch gekennzeichnet, dass** die Kalibrierparameter der Sensoren geometrische Daten über den Einbauort der Sensoren in dem mit dem Fahrerassstenzsystem ausgerüsteten Fahrzeug umfassen.

3. Fahrerassistenzsystem nach einem der vorhergehenden Ansprüche, **dadurch gekennzeichnet, dass** die Kalibrierparameter Ortskoordinaten lokaler (sensorfester) Koordinatensysteme (K1, K2, K12)umfassen.

4. Fahrerassistenzsystem nach einem der vorhergehenden Ansprüche, **dadurch gekennzeichnet, dass** das Fahrerassistenzsystem ein dem Fahrzeug zugeordnetes zentrales Koordinatensystem (K0) umfasst.

5. Fahrerassistenzsystem nach einem der vorhergehenden Ansprüche, **dadurch gekennzeichnet, dass** das Fahrerassistenzsystem ein Funktionsmodul(4.2) für die Koordinatentransformation, insbesondere für die Transformation der Koordinaten lokaler Koordinatensysteme (Ki) in ein zentrales Koordinatensystem (K0) umfasst.

6. Verfahren für den Betrieb eines eine Vielzahl von Sensoren umfassenden Fahrerassistenzsystems, **dadurch gekennzeichnet, dass** für jeden der Sensoren Kalibrierparameter bestimmt werden (offline und/oder online) und dass die bestimmten Kalibrierparameter in einer zentralen Speichereinrichtung (Funktionsmodul 4.1) gespeichert werden.

7. Verfahren nach Anspruch 6, **dadurch gekennzeichnet, dass** gespeicherte Kalibrierparameter der Sensoren mit aktuellen Sensordaten verglichen werden und dass durch Auswertung von erfassten Änderungen dynamische Änderungen der Fahrzeuglage, wie insbesondere Nick- und Wankbewegungen des Fahrzeugs, detektiert werden.

8. Verfahren nach einem der vorhergehenden Ansprüche, **dadurch gekennzeichnet, dass** gespeicherte Kalibrierparameter dynamisch nachgeführt werden und dass Nick- und/oder Wankbewegungen des Fahrzeugs aus den dynamisch nachgeführten Kalibrierparametern abgeleitet werden.

9. Verwendung der Verfahren nach einem der vorhergehenden Ansprüche für die Kreuzkalibrierung von Sensoren.
